# EUROPEAN PATENT SPECIFICATION

(11) **EP 2 437 328 B1**
(45) Date of publication and mention of the grant of the patent: **25.02.2015**
(21) Application number: 11178323.9
(22) Date of filing: 22.08.2011
(51) Int. Cl.: H01M 2/10

(54) **Battery devices for power tools**
Batterievorrichtungen für Elektrowerkzeuge
Dispositifs de batterie pour outils électriques

(30) Priority: 31.08.2010 JP 2010193650
(43) Date of publication of application: 04.04.2012
(73) Proprietor: Makita Corporation, Anjo, Aichi 446-8502 (JP)
(72) Inventor: Iyoda, Hiroyuki, Anjo, Aichi 446-8502 (JP); Kanayaja,Hiroaki, Anjo, Aichi 446-8502 (JP); Yamaguchi, Hiroshi, Anjo, Aichi 446-8502 (JP)
(74) Representative: Kramer Barske Schmidtchen Patentanwälte PartG mbB

(56) References cited:
- US-A- 5 680 026
- US-A- 6 087 815
- US-A1- 2008 012 526

## Description

The present invention relates to battery devices used for power tools.

US 2008/0012526 A1 discloses an adapter system for battery-powered tools.

There have been proposed hand-held power tools, such as hand-held power screwdrivers and drills, which can be grasped by users when used, and for which rechargeable batteries can be used as power sources. In many cases, batteries in forms of battery packs are used for mounting to the tool bodies of the power tools. The battery packs can be removed from the tool bodies and can be recharged by battery chargers that are prepared separately from the battery packs.

In general, a battery pack used for a power tool has a plurality of battery cells accommodated within a battery case, and therefore, the battery pack has a relatively heavy weight. For this reason, if the user grasps the power tool having the battery pack mounted thereto and operates the power tool during a long time, it may be possible that his or her wrist wears out to cause reduction in the work performance. In order to solve this problem, Japanese Laid-Open Utility Model Publication No. 7-3983 has proposed a technique, in which a battery device is used for separating the battery pack from the tool body in order to reduce the weight of the tool body.

The battery device disclosed in the above publication includes an adaptor unit for mounting to the tool body, and a body unit that can accommodate the battery pack and can be hooked to a waist belt or the like of the user. The adaptor unit is electrically connected to the body unit via an adaptor cord. With this arrangement, the body unit accommodating the battery pack that is a relatively heavy product is hooked to the waist belt or the like of the user, while the weight of the adaptor unit mounted to the tool body can be substantially reduced because the adaptor unit has no battery cells. Therefore, the tool body can be easily handled and the flexibility in designing the tool body can be improved, and eventually, it is possible to improve the operation efficiency.

However, in the case that the user stops the operation for taking a break or the like and puts the tool body in the workplace, it is necessary to remove the adaptor unit from the tool body and carry the adaptor unit together with the body unit or to remove the body unit from the waist belt or the like and put the body unit in the workplace together with the adaptor unit. Thus, because the adaptor unit and the body unit are connected to each other by the adaptor cord, these units are difficult to be handled in some cases.

Therefore, there is a need in the art for a battery device that can be easily handled.

This object can be solved by providing a battery device according to claim 1.

According to the present teaching, a battery device has a body unit having a battery pack mounted thereto, an adaptor cord and a connecting device. An adaptor cord can connect the body unit to a power tool. A connecting device is associated with the adaptor cord for permitting the body unit to be separated from the power tool.

Additional objects, features, and advantages, of the present invention will be readily understood after reading the following detailed description together with the claims and the accompanying drawings, in which:
FIG 1 is a perspective view showing a trimming operation performed by a gardening tool using a battery device according to a first example (not showing all features of the claims);
FIG. 2 is a perspective view showing the battery device mounted to the gardening tool;
FIG. 3 is a perspective view of the battery device and showing the state where an adaptor unit is connected to a body unit;
FIG. 4 is a perspective view of the battery device showing the state where the adaptor cord is disconnected from the body unit;
FIG. 5 is a perspective view of the body unit and showing the state where a lid of the body unit is opened.
FIG. 6 is a perspective view showing a connecting device in a disconnected state;
FIG. 7 is a perspective view of a battery device according to a second example (not showing all features of the claims);
FIG. 8 is a perspective view of a battery device according to a third example;
FIG 9 is a perspective view of a battery device according to a fourth example; and
FIG 10 is a perspective view of a battery device according to a fifth example.

Each of the additional features and teachings disclosed above and below may be utilized separately or in conjunction with other features and teachings to provide improved battery devices and systems incorporating such battery devices. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

In one example, a battery device includes a body unit having a battery pack mounted thereto, and an adaptor cord an adaptor cord capable of connecting the body unit to a power tool, so that an electric power of the battery pack can be supplied to the power tool via the adaptor cord. A connecting device is associated with the adaptor cord and operable between a connecting state and a disconnecting state. The body unit can be separated from the power tool when the connecting device is in a disconnecting state. The connecting device may be provided between the body unit and the adaptor cord and/or between the adaptor cord and the power tool and/or at the midpoint of the adaptor cord.

The battery device may further include an adaptor unit capable of being mounted to a battery mount portion of the power tool. When the connecting device is in the connecting state, the adaptor unit and the body unit are connected to each other via the adaptor cord, so that the body unit can be connected to the power tool with the intervention of the adaptor unit.

With this arrangement, an electric power is supplied from the body unit via the adaptor unit that is mounted to the battery mount portion of the power tool. The battery device can be separated from the power tool by removing the adaptor unit from the battery mount portion. Alternatively, the body unit can be separated from the power tool by disconnecting the connecting device that connects between the adaptor unit and the body unit. Therefore, it is possible to reduce the weight of the power tool during the operation of the power tool, so that the operation can be efficiently performed. In addition, the battery device can be easily operated and handled, for example, in the even that the user wishes to leave the workplace after stopping the operation of the power tool.

The connecting device may directly connect the adaptor cord to the power tool. For example, the connecting device may include a male connector connected to one end of the adaptor cord on the side of the body unit and a female connector mounted to the tool body. With this arrangement, it is possible to connect the body unit to the power tool without intervention of the adaptor unit. Also with this arrangement, the body unit can be easily separated from the power tool by disconnecting the connecting device.. Therefore, it is possible to reduce the weight of the power tool during the operation of the power tool, and the battery device can be easily operated and handled.

The connecting device may be provided at a midpoint of the adaptor cord, so that the adaptor cord can be separated into a portion on the side of the body unit and a portion on the side of the power tool.

The connecting device may be configured to prevent accidental disconnection. With this arrangement, it is possible to prevent accidental interruption of the operation of the power tool.

The connecting device may be configured to prevent water from accidentally entering inside of the connecting device. This enables the outdoor use of the battery device.

The connecting device may be also configured to connect the body unit to a battery charger. With this arrangement, it is possible to charge the battery pack of the body unit by connecting the body unit to the battery charger. Therefore, the usability of the battery device can be further improved.

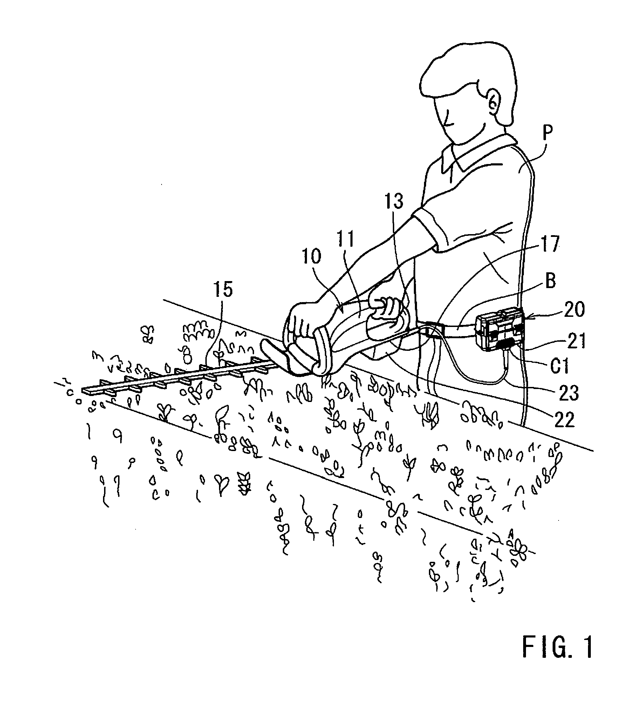

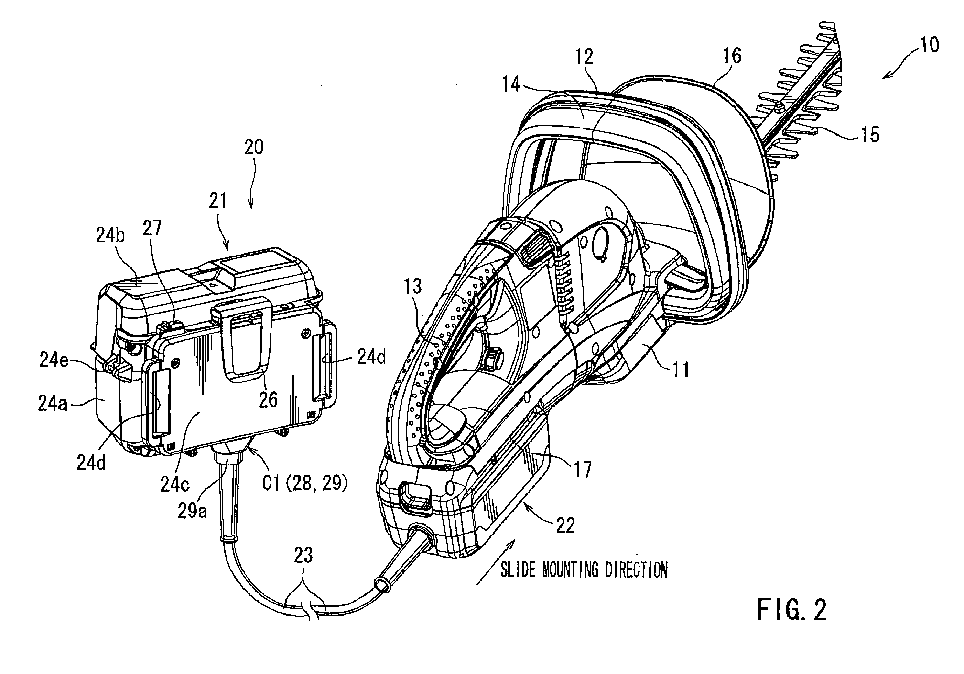

A first example will now be described with reference to FIGS. 1 to 6. Referring to FIG 2, there is shown a gardening tool 1 known as a hedge trimmer. A battery device 20 is shown in the state of being connected to the gardening tool 1. The construction of the gardening tool 1 is basically the same as that of a known hedge trimmer, and therefore, the gardening tool 1 will be described in brief. The gardening tool 1 generally includes a tool body 11 and a blade device 15. The tool body 11 has a main grip portion 13 capable of being grasped by the user. The blade device 15 protrudes forwardly from the front portion of the tool body 11. A battery pack mount portion 17 is provided on the lower surface side of the main grip portion 13. A battery pack (not shown) can be mounted to the battery pack mount portion 17 for supplying an electric power to the tool body 11. In this example, the gardening tool 1 is designed to operate with a supply of electric power of 36V In other words, the gardening tool 1 has a rating voltage of 35V Therefore, in the case that a battery pack is directly mounted to the battery pack mount portion 17, it is necessary to have a voltage of 36V

A loop-shaped sub-grip portion 12 is provided on the front portion of the tool body 11. A switch lever 14 having a loop shape similar to that of the sub-grip portion 12 is mounted to the front portion of the tool body 11 and extends along the sub-grip portion 12. A guard plate 16 is mounted to the tool body 11 at a position on the front side of the sub-grip portion 12 for the purpose of protecting the hand of the user when the user grasps the sub-grip portion 12. In order to start a motor (not shown) of the tool body 11, the user grasps the main grip portion 13 with his or her one hand and the sub-grip portion with the other hand. Then the user pulls a switch lever (not shown) provided on the side of the main grip portion 13 and the switch lever 14 on the side of the sub-grip portion 12 simultaneously, so that the blade device 15 is reciprocally driven by the motor.

As described above, the battery pack mount portion 17 of the tool body 11 is configured to be able to mount a battery pack having a rating voltage of 36V In place of the battery pack, an adaptor unit 22 of the battery device 20 can be mounted to the battery pack mount portion 17 as shown in FIG 1.

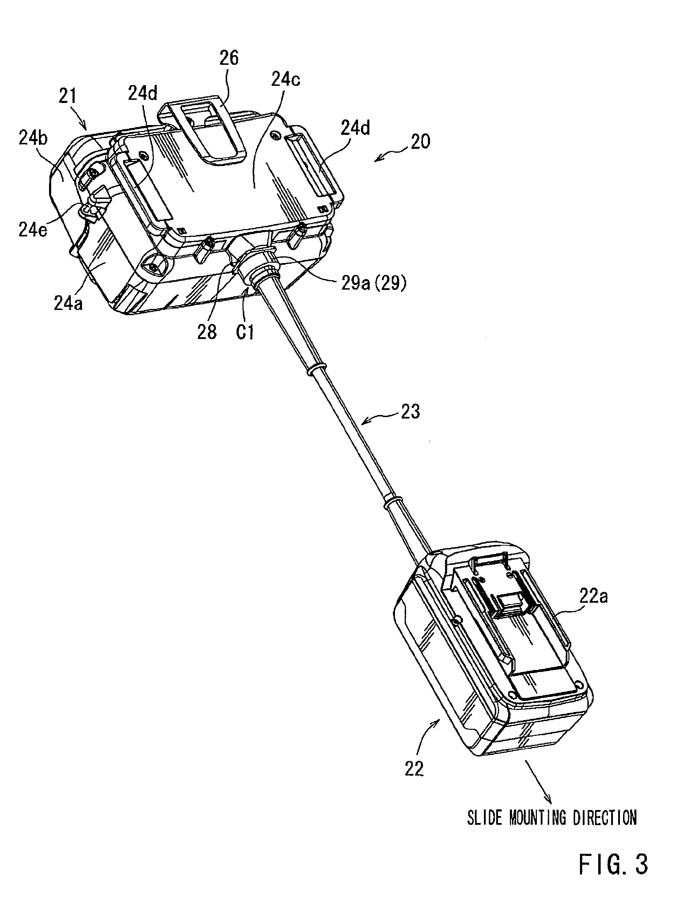

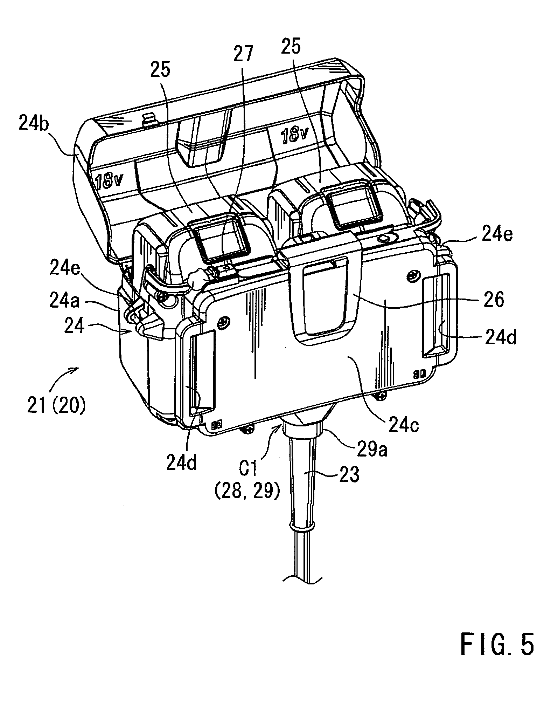

As shown in FIG 3, the battery device 20 includes a body unit 21, the adaptor unit 22 and an adaptor cord 23 that electrically mechanically connects between the body unit 21 and the adaptor unit 22. As shown in FIG 5, the body unit 21 has a battery storage case 24 that stores two battery packs 25 therein. The battery storage case 24 has a case body 24a and a lid 24b. The case body 24a has an upper opening and defines a storage space for storing the battery packs 25. The lid 24b is hinged to the battery storage case 24 for opening and closing the battery storage case 24. When the battery packs 25 are properly oriented and inserted into the case body 24a, the battery packs 25 are electrically connected in series with a power source circuit of a power source circuit board (not shown) disposed within the case body 24a. When the lid 24b is closed, the battery packs 25 are fixed in position within the case body 24a. A slide lock device 27 is operable to lock the lid 24b against the case body 24a when the lid 24b is closed.

Each of the battery packs 25 has a battery case and a plurality of battery cells (not shown), such as lithium-ion battery cells, which are mounted within the battery case and output a rating voltage of 18V Therefore, each of the battery packs 25 can be used for supplying a power to the other power tool operating with a supply of power of 18V The battery packs 25 can be recharged by a battery charger (not shown in FIGS. 1 to 6) for repeated use.

A backside surface 24c of the case body 24a is gently curved so as to fit with the waist of the user. A hook 25 is mounted to the case body 24 at the upper portion of the backside surface 24c. The hook 25 can be hooked to a waist belt or the like of the user, so that the user can carry the body unit 21 in the state that the body unit 21 is suspended from the waist belt or the like.

Belt insertion holes 24d for inserting a waist belt are formed in the left and right side portions of the case body 24a. Therefore, as shown in FIG 1, a user P wearing a waist belt B can hold the body unit 21 around his waste by inserting the waist belt B into the belt insertion holes 24d of the case body 24a.

Hooks 24e are mounted to the left and right side surfaces of the case body 24a. A shoulder belt (not shown) can be hooked to the hooks 24e. Therefore, the user can carry the body unit 21 on his or her shoulder by hooking opposite ends of the shoulder belt to the hooks 24e.

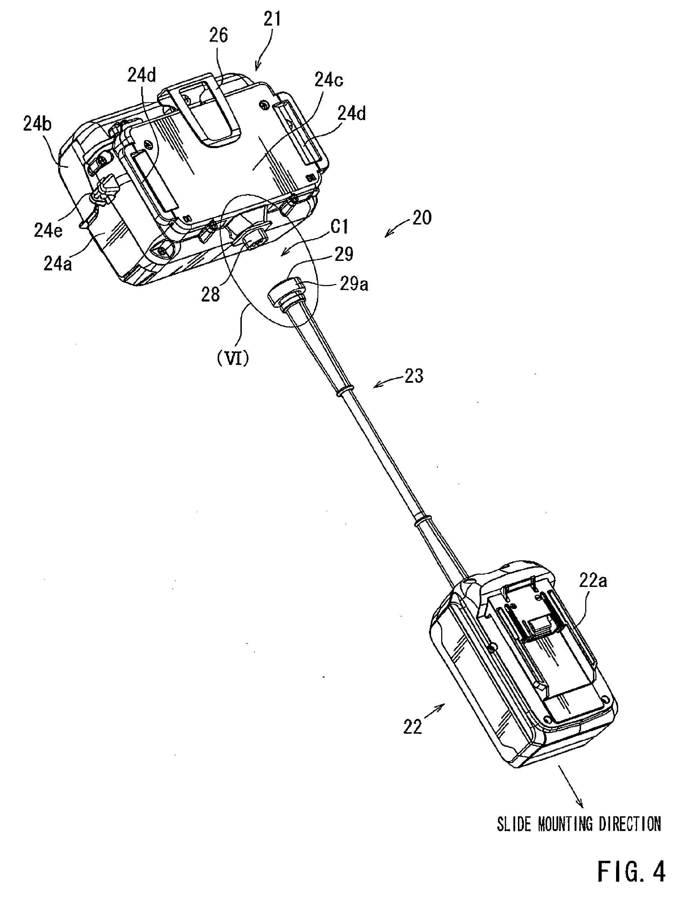

The adaptor cord 23 is removably connected to the bottom of the case body 24a via a connecting device C1 that can be operable between a connecting state and a disconnecting state as will be hereinafter explained. The connecting device C1 includes a male connector 28 mounted to the bottom of the case body 24a and a female connector 29 mounted to one end of the adaptor cord 23. The female connector 29 can be connected to and disconnected from the male connector 28. Therefore, the adaptor cord 23 can be removed from the case body 24a by disconnecting the female connector 29 from the female connector 28 as shown in FIG 4.

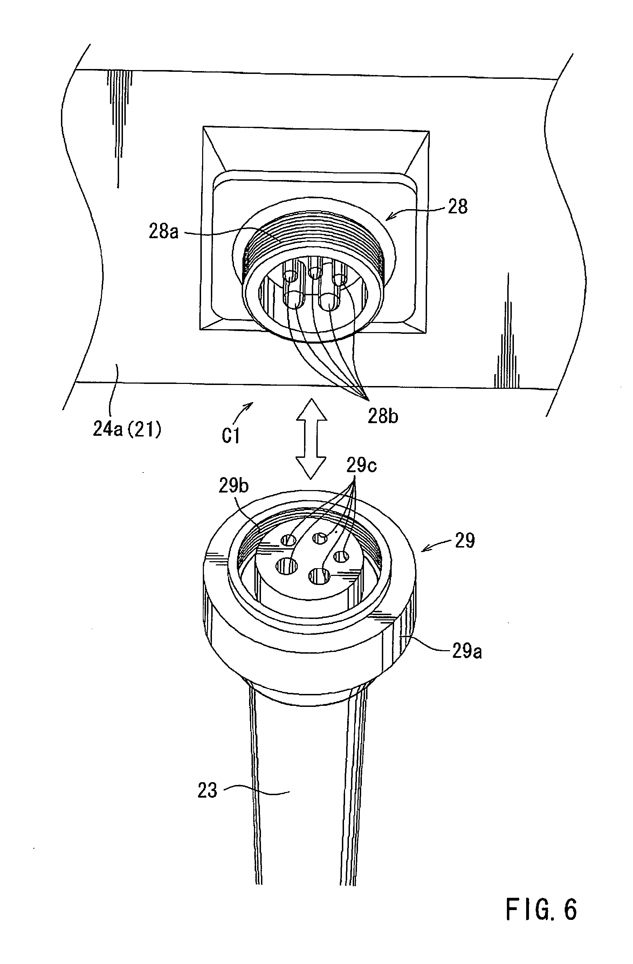

As shown in FIG 6, the mail connector 28 has a threaded shaft portion 28a and a plurality of connecting terminals 28b positioned inside of the threaded shaft portion 28a. The threaded shaft portion 28a has an external thread and has a cylindrical tubular configuration. The connecting terminals 28b are electrically connected to the power source circuit of the power source circuit board disposed within the case body 24a.

The female connector 29 has an operation ring 29a with an internal thread 29b, and a plurality of terminal insertion holes 29c formed in the end portion of the adaptor cord 23a positioned inside of the operation ring 29a. The operation ring 29a is rotatably mounted to the end portion of the adaptor cord 23. Therefore, the male connector 28 and the female connector 29 can be electrically and mechanically connected to each other by inserting the connection terminals 28b into the terminal insertion holes 29c and thereafter engaging and tightening the internal thread 29b of the operation ring 29a with the external thread of the threaded shaft portion 28a by rotating the operation ring 29a in the tightening direction. In this way, the connecting device C1 can electrically and mechanically connect the adaptor cord 23 to the body unit 21. Because the connection state of the connecting device C1 is achieved through thread engagement between the female connector 29 and the male connector 28, it is possible to prevent the connecting device C1 from being accidentally disconnected to cause removal of the adaptor cord 23. Thus, the threaded shaft portion 28a of the male connector 28 and the internal thread 29b of the female connector 29 of the connecting device C1 serves as a removal preventing device for preventing the adaptor cord 23 from being accidentally removed.

In order to bring the connecting device C1 from the connecting state to the disconnecting state, the user rotates the operation ring 29a in the loosening direction, so that the operation ring 29a is removed from the threaded shaft portion 28a. Therefore, the adaptor cord 23 is disconnected from the body unit 21.

The adaptor unit 22 is fixedly connected to the other end of the adaptor cord 23. The adaptor unit 22 has a slide mount portion 22a that can be mounted to the battery pack mount portion 17 of the tool body 11 as it is slid along the battery pack mount portion 17 in a slide mounting direction indicated in FIGS. 3 and 4. At the same time the adaptor unit 22 is mounted to the battery pack mount portion 17, the adaptor unit 22 is electrically connected to the power source circuit of the power source circuit board of the tool body 11. Because the adaptor unit 22 has no battery cells, the weight of the adaptor unit 22 is lower than the weight of the battery pack 25 having the battery cells.

As the adaptor unit 22 is electrically connected to the power source circuit of the tool body 11, the body unit 21 is electrically connected to the power source circuit via the adaptor cord 23, so that an electric power can be supplied to the motor of the tool body 11 from the battery packs 25.

As described above, with the battery device 20 of the above example, when the male connector 28 of the body unit 21 is connected to the female connector 29 of the adaptor cord 23, an electric power can be supplied from the battery packs 25 of the body unit 21 to the tool body 11 of the power tool, so that it is possible to operate the blade device 15 of the gardening tool 10. In this way, the battery device 20 serves as a component of a system including the power tool and the battery device 20.

The body unit 21 is a separate unit from the tool body 11. In addition, the body unit 21 can be hooked to the waist belt B of the user P, so that the user can carry the body unit 21. Therefore, the gardening tool 10 can be operated in the state that its weigh is reduced because the adaptor unit 22 is mounted to the battery pack mount portion 17 of the tool body 11 in place of the battery pack 25. As noted above, the adaptor unit 22 is substantially reduced in weight in comparison with the battery pack 25. Hence, the gardening tool 10 can be easily handled and operated, so that the operation efficiency can be improved.

In addition, the body unit 21 can be separated from the adaptor unit 22 and eventually from the tool body 11 by rotating the operation ring 29a in the loosening direction for disconnecting the female connector 29 of the connecting device C1 from the male connector 28 of the same. Therefore, in the case that the user stops the trimming operation for taking a break or the like, he or she can disconnect the adaptor cord 23 from the body unit 21 and can leave the workplace with the body unit 21 suspended from the waist belt.

In order to restart the trimming operation, the user connects the female connector 29 on the side of the adaptor cord 23 to the male connector 28 on the side of the body unit 21, so that the gardening tool 10 is brought to a ready-to-use condition.

In this way, the body unit 21 having the battery packs 25 can be separated from the tool unit 11 in the state that the adaptor unit 22 is mounted to the tool unit. Therefore, the user can leave away from the gardening tool 10 while the body unit 21 being carried by the user as it is suspended from the waist belt. The battery device 20 can be easily operated and handled also in this respect.

Further, because the connecting device C1 of the adaptor cord 23 may not be accidentally disconnected, the supply of power to the tool body 11 can be reliably maintained. Therefore, it is possible to prevent the trimming operation from being accidentally interrupted.

Furthermore, the connecting terminals 28b of the male connector 28 are disposed inside of the threaded shaft portion 28a and the terminal connecting holes 29c are positioned inside of the operation ring 29a. Therefore, in the connecting state of the connecting device C1, the connecting terminals 28b and the terminal connecting holes 29c are surrounded by the thread connection portion and are not exposed to the outside. Hence, the connecting device C1 has a waterproof function. This enables the battery device 20 to be used for outdoor works even in the rain. The operability of the battery device 20 is improved also in this respect.

The above representative example may be modified in various ways. For example, although the removal preventing structure of the connecting device C1 utilizes the thread connection between the threaded shaft portion 28a of the male connector 28 and the internal thread 29b of the female connector 29, the removal preventing structure may utilize engagement of a resiliently deformable claw or may utilize a fastening band.

Further, the male connector 28 and the female connector 29 of the connecting device C1 may be interchanged to each other. Thus, the female connector 29 may be mounted to the body unit 21, and the male connector 28 may be mounted to the end portion of the adaptor cord 23 on the side of the adaptor unit 22.

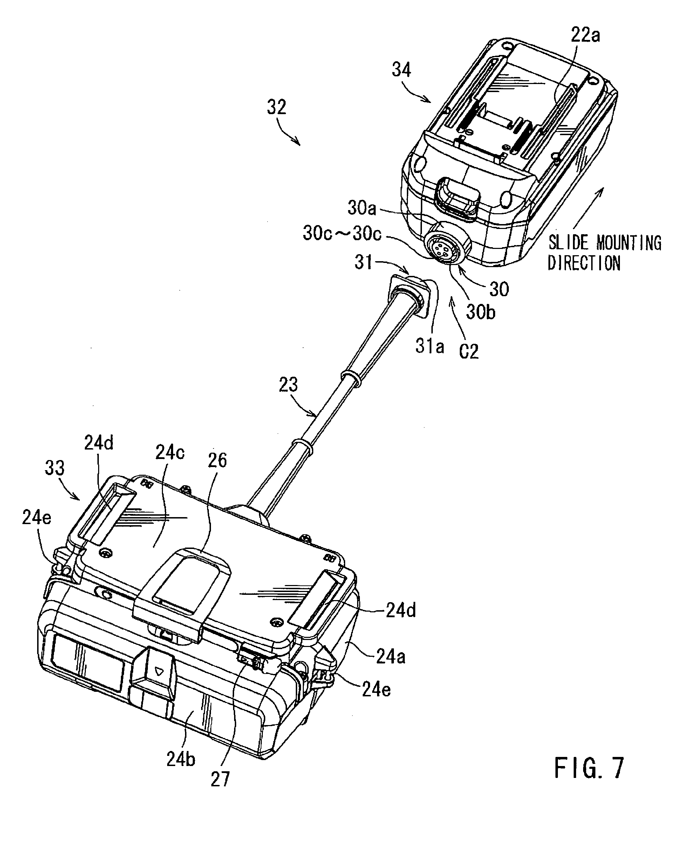

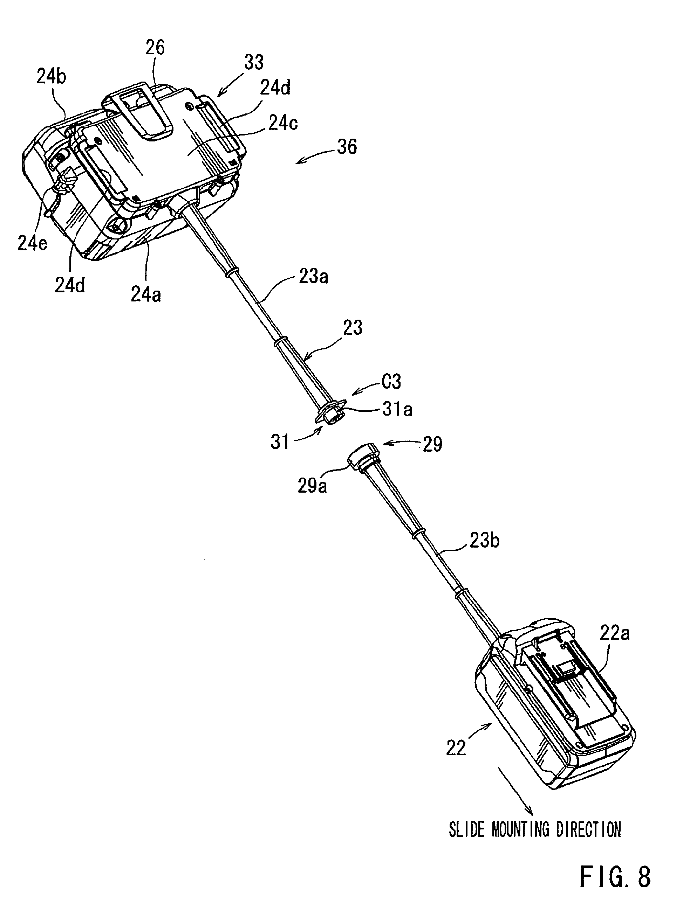

Furthermore, although the connecting device C1 for the adaptor cord 23 is positioned at the bottom of the body unit 21, the connecting device C1 may be positioned at the bottom of the adaptor unit 22 for enabling separation of the body unit 21 from the adaptor unit 22. In such a case, the connecting device C1 may be positioned at the end portion of the adaptor cord 23 on the side of the adaptor unit 22 as will be explained in a second example with reference to FIG 7, which shows a battery device 32 according to the second example. Alternatively, the connecting device C1 may be positioned at the midpoint of the adaptor cord 23 as will be explained in a third example with reference to FIG 8, which shows a battery device 36 according to the third example. The construction of the battery device 32 of the second example is the same as that of the battery device 20 of the first example except that the construction of a connecting device C2 of the battery device 32 is different from the connecting device C1. Similarly, the construction of the battery device 36 of the third example is the same as that of the battery device 20 of the first example except that the construction of a connecting device C3 of the battery device 36 is different from the connecting device C1. Therefore, in FIGS. 7 and 8, like members are given the same reference signs as the first example and the description of these members will not be repeated.

The second example will now be described with reference to FIG 7. In the case of the battery device 32 of this example, one end of the adaptor cord 23 is non-removably connected to the bottom of a body unit 33, while the other end of the adaptor cord 23 is removably connected to an adaptor unit 34 via the connecting device C2.

The connecting device C2 has a female connector 30 and a male connector 31. The female connector 30 is directly mounted to the rear surface of the adaptor unit 34 on the side opposite to the sliding direction of the adaptor unit 34 for mounting to the tool body 11. The female connector 30 corresponds to the female connector 29 of the first example and includes an operation ring 30a that is operated to rotate. An internal thread 30b is formed on the inner circumference of the operation ring 30a. The female connector 30 has a plurality of terminal insertion holes 30c positioned inside of the operation ring 30a.

The male connector 31 is mounted to the end portion of the adaptor cord 23 on the side opposite to the body unit 33. The male connector 31 corresponds to the male connector 28 of the first example and has a threaded shaft portion 31a and a plurality of connecting terminals (not shown in FIG 7) positioned inside of the threaded shaft portion 31a. The threaded shaft portion 31a has an external thread and has a cylindrical tubular configuration. Therefore, the male connector 31 and the female connector 30 can be electrically and mechanically connected to each other by inserting the connection terminals of the male connector 31 into the terminal insertion holes 30c of the female connector 30 and thereafter engaging and tightening the internal thread 30b of the operation ring 30a with the external thread of the threaded shaft portion 31a by rotating the operation ring 30a in the tightening direction. In this way, the connecting device C2 can electrically and mechanically connect the body unit 33 to the adaptor unit 34 via the adaptor cord 23.

In order to disconnect the connecting device C2, the user rotates the operation ring 30a in the loosening direction, so that the adaptor cord 23 can be disconnected from the adaptor unit 34. Therefore, the user can leave the gardening tool 10 and the adaptor unit 34 at the workplace while the body unit 33 being carried by the user as it is suspended from the waist belt. As a result, similar to the first example, the battery device 32 of the second example can be easily operated and handled.

The third example will now be described with reference to FIG 8. In the case of the battery device 36 of this example, the connector device C3 is connected to the adaptor cord 23 at the midpoint of the adaptor cord 23, more specifically, at an intermediate position along the length of the adaptor cord 23. Therefore, in this example, the adaptor cord 23 has a first cord portion 23a and a second cord portion 23b each having substantially half the length of the adaptor cord 23. One end of the first cord portion 23a is non-removably connected to the bottom of the body unit 33. The male connector 31 is mounted to the other end of the first cord portion 23a. Thus, in this third example, the body unit 33 of the second example can be used without need of modification. One end of the second cord portion 23b is non-removably connected to the rear surface of the adaptor unit 22 on the side opposite to the sliding direction of the adaptor unit 22 for mounting to the tool body 11. The female connector 29 having the operation ring 29a is mounted to the other end of the second cord portion 23b. Thus, in the third example, the adaptor unit 22 of the first example can be used without need of modification.

In this way, the battery device 36 of this example can be configured by connecting the adaptor unit 22 of the first example and the body unit 33 of the second example to each other by the connection device C3 at the midpoint of the cord 23. Because the connection device C3 can be disconnected, it is possible to separate the body unit 33 from the adaptor unit 22 and eventually from the tool body 11. Therefore, the battery device 36 can be easily operated and handled.

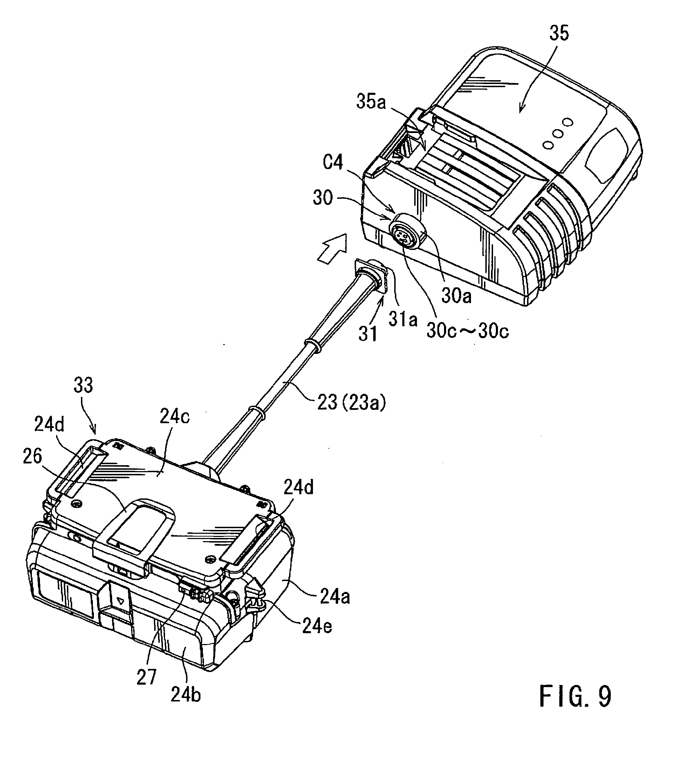

A fourth example will now be described with reference to FIG 9. The fourth example is a modification of the previous examples, and therefore, in FIG 9, like members are given the same reference signs as the first example, and the description of these members will now be repeated. The fourth example is configured to enable the body unit 33 to be connected to a battery charger 35 via the adaptor cord 23 in order to charge the battery packs 25 (not shown in FIG 9) mounted within the body unit 33. As shown in FIG 9, one end of the adaptor cord 23 (more specifically, the first cord portion 23a) is non-removably connected to the bottom of the body unit 33. A connecting device C4 includes the male connector 31 mounted to the other end of the first cord portion 23a. In this way, the body unit 33 of the second example shown in FIG 7 or the body unit 33 of the third example shown in FIG 8 can be used as the body unit of the fourth example.

The basic structural construction and the basic circuit configuration of the battery charger 35 necessary for charging the battery are the same as those of a well-known battery charger. Therefore, the general construction of the battery charger 35 will be described in brief and the description of the battery charger 35 will be focused mainly to the construction that is different from the known battery charger. The battery charger 35 has a battery pack mount portion 35a disposed on an upper surface of the battery charger 35. The battery pack mount portion 35a is configured to be similar to the battery pack mount portion 17 of the tool body 11, so that the battery pack 25 (or the adaptor unit 22 (34)) can be mounted to the battery pack mount portion 35a as it is slid along the battery pack mount portion 35a in a slide mounting direction.

As a most important feature different from a known battery charger, the connecting device C4 includes the female connector 30 that is directly mounted to a lateral side of the battery charger 35. The female connector 30 is that as used for the adaptor unit 34 of the second example (see FIG 7).

Therefore, the body unit 33 can be electrically connected to the battery charger 35 via the connection device C4 that includes the male connector 31 and the female connector 30. In order to connect the connectors 31 and 30 to each other, the threaded shaft portion 31a of the male connector 31 on the side of the body unit 33 is inserted into the operation ring 30a of the female connector 30 on the side of the battery charger 35, so that the connection terminals of the male connector 31 are inserted into the terminal connection holes of the female connector 30. Thereafter, the operation ring 30a is rotated in the thread tightening direction relative to the threaded shaft portion 31a, so that the connectors 31 and 30 are threadably connected to each other.

In the state that the body unit 33 is electrically connected to the battery charger 35, the battery charger 35 is operated to start a charging operation, so that the battery packs 25 mounted within the body unit 33 can be recharged.

In this way, according to the fourth example, the charging operation of the battery packs 25 can be performed by connecting the body unit 33 of the second or third example to the battery charger 35 via the connecting device C4. Therefore, it is not necessary to remove the battery packs 25 from the body case 24a and to mount the battery packs 25 one by one for recharging them. Thus, it is possible to simultaneously charge the battery packs 25 by using the battery device of this example.

Although the male connector 31 is mounted to the side of the body unit 33 and the female connector 30 is mounted to the side of the battery charger 35, this arrangement can be inverted.

In addition, one of the connectors 30 and 31 can be directly mounted to the bottom of the body unit 33 and the other of the connectors can be connected to the battery charger 35 via an adaptor cord. It is also possible to connect the connectors 30 and 31 to the body unit 33 and the battery charge 35 via adaptor cords, respectively.

The first to fourth examples may be modified such that the adaptor cord or the male or female connector is connected to a lateral side portion or any other portion of the body unit 21 (33) other than the bottom. In addition, the body unit 21(33) may be configured to be carried by the user by any other devices than the waist belt and the shoulder belt. For example, the body unit may be configured to be able to be carried on the back of the user.

Further, the number of the battery packs 25 mounted within the body unit 21(33) may not be limited to two but may be one or three or more. In this connection, although the battery packs 25 are 18V batteries and are connected in series with each other to provide a 36V output usable for a power tool having a rating voltage of 36V, one battery pack 25 or two battery packs 25 connected in parallel to each other may be used for providing a 18V output usable for a 18V power tool. When only one battery pack 25 is used, the weight of the body unit and eventually the weight of the tool body 11 can be reduced. When two or more battery packs are connected in parallel to each other, it is possible to increase the continuously usable time of the body unit.

Further, although the gardening tool 10 has been explained as an example of a power tool in the above examples, the battery devices of the above examples can be applied to any other battery-driven tools, such as an electric drill, an electric screwdriver and an electric cutting device.

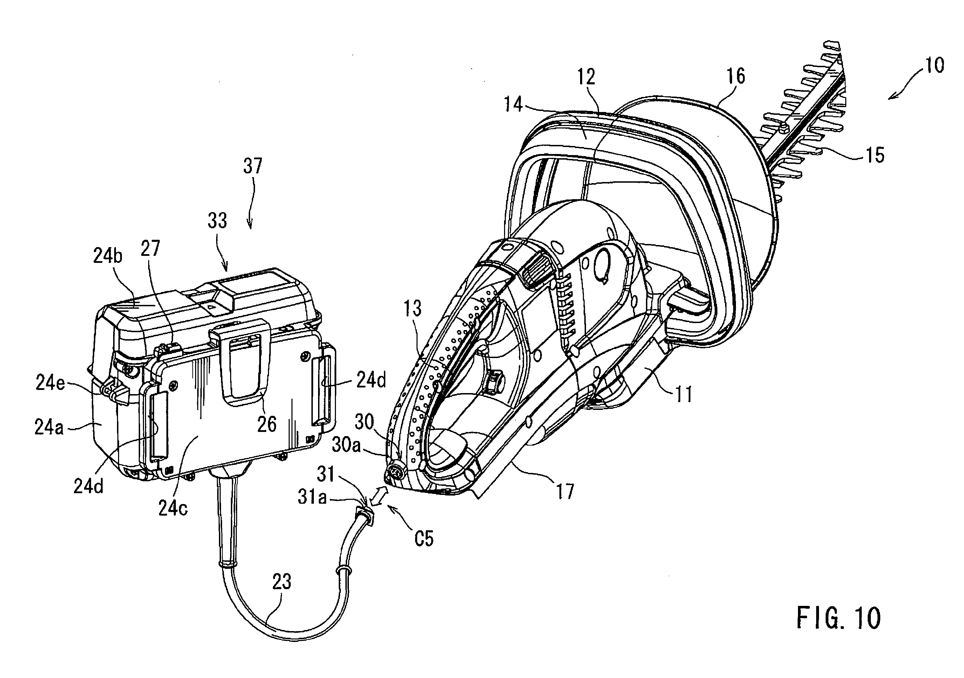

Furthermore, although the body unit 21 (33) is connected to the gardening tool 10 indirectly via the adaptor unit 22 (34), it may be possible to connect the body unit without intervention of the adaptor unit. This alternative example will now be described as a fifth example with reference to FIG 10.

Referring to FIG 10, a battery device 37 has a connecting device C5 configured to connect the body unit 33 of any of the second to fourth examples to the tool body 11 without intervention of the adaptor unit. One end of the adaptor cord 23 is connected to the bottom of the body unit 33. The connecting device C5 includes the male connector 31 and the female connector 30 that are similar to those of the second and fourth examples. The male connector 31 is mounted to the end portion of the adaptor cord 23 opposite to the body unit 33. The female connector 30 is mounted to the rear portion of the main grip portion 13 of the tool body 11.

Therefore, the body unit 33 can be electrically connected to the body unit 11 via the electric cord 23 and the connecting device C5 without need of the adaptor unit 22 (34) of the first to third examples. Thus, by disconnecting the connecting device C5, the body unit 33 can be separated from the tool body 11, so that the user can carry the body unit 33 away from the tool body 11, while the body unit 33 being suspended from the waist belt or the like. As a result, the weight of the power tool (tool body 11) can be reduced to improve the operation efficiency. In addition, because the body unit 33 can be separated from the tool body 11 when the user leaves away from the workplace after stopping the operation of the power tool. Therefore, the battery device 37 of this example can be easily operated and handled.

In the above first to fifth examples, only one connecting device is provided at one end of the adaptor cord connecting between the tool unit (or the adaptor unit) and the body unit or at a midpoint of the adaptor cord. However, two connecting devices can be provided at opposite ends of the adaptor cord in such a manner that the opposite ends of the adaptor cord are connected to the tool unit (or the adaptor unit) and the body unit via the connecting devices, respectively.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A battery device (36) comprising:
a body unit (33) having a battery pack (25) mounted thereto;
an adaptor cord (23) capable of connecting the body unit (33) to a power tool (10), so that an electric power of the battery pack (25) can be supplied to the power tool (10) via the adaptor cord (23);
a connecting device (C3) associated with the adaptor cord (23) and operable between a connecting state and a disconnecting state, wherein the body unit (33) is separable from the power tool (10) when the connecting device (C3) is in the disconnecting state, and
an adaptor unit (22) adapted to be mountable to a battery mount portion (17) of the power tool (10), wherein when the connecting device (C3) is in the connecting state, the adaptor unit (22) and the body unit (33) are connected to each other via the adaptor cord (23), so that the body unit (33) is connectable to the power tool (10) with the intervention of the adaptor unit (22),
wherein the body unit (33) is adapted to be carried on a back of user,
**characterized in that**
the connecting device (C3) is provided at a midpoint of the adaptor cord (23), and
the adapter unit (22) comprises a slide mount portion (22a) that is adapted to be mounted to the battery pack mount portion (17) of the power tool (10) as it is slid along the battery pack mount portion (17) in a slide mounting direction.

2. The battery device (37) as in claim 1, wherein the connecting device is operable to directly connect the adaptor cord (23) to the power tool (10).

3. The battery device as in any one of the preceding claims, wherein the connecting device (C3) includes a removal preventing mechanism configured to prevent accidental disconnection of the connecting device (C3).

4. The battery device as in any one of the preceding claims, wherein the connecting device (C3) includes a waterproof mechanism configured to prevent water from accidentally entering inside of the connecting device (C3).

5. The battery device as in any one of the preceding claims, wherein the body unit (33) is connectable to a battery charger (35) via the connecting device.

6. A system comprising the power tool (10) and the battery device as in any one of claims 1 to 5.

7. The system as in claim 6, further comprising a battery charger (35), wherein the body unit (33) can be connected to a battery charger (35) via the connecting device.

## Patentansprüche

1. Batterievorrichtung (36), mit
einer Körpereinheit (33), die ein daran montiertes Batteriepack (25) aufweist,
einem Adapterkabel (23), das die Körpereinheit (33) mit einem Kraftwerkzeug (10) verbinden kann, so dass eine elektrische Leistung des Batteriepacks (25) dem Kraftwerkzeug (10) über das Adapterkabel (23) zugeführt werden kann,
einer Verbindungsvorrichtung (C3), die mit dem Adapterkabel (23) assoziiert ist und zwischen einem Verbindungszustand und einem Nicht-Verbindungszustand betätigbar ist, wobei die Körpereinheit (33) von dem Kraftwerkzeug (10) trennbar ist, wenn die Verbindungsvorrichtung (C3) in dem Nicht-Verbindungszustand ist, und
einer Adaptereinheit (22), die dazu angepasst ist, an einem Batteriepackmontierteil (17) des Kraftwerkzeuges (10) montierbar zu sein, wobei, wenn die Verbindungsvorrichtung (C3) in dem Verbindungszustand ist, die Adaptereinheit (22) und die Körpereinheit (33) miteinander über das Adapterkabel (23) verbunden sind, so dass die Körpereinheit (33) mit dem Kraftwerkzeug (10) unter Zwischenschaltung der Adaptereinheit (22) verbindbar ist,
bei der die Körpereinheit (33) dazu angepasst ist, auf einem Rücken eines Benutzers getragen zu werden,
**dadurch gekennzeichnet, dass**
die Verbindungsvorrichtung (C3) an einem Mittelpunkt des Adapterkabels (23) vorgesehen ist, und
die Adaptereinheit (22) einen Gleitmontierteil (22a) aufweist, der dazu angepasst ist, an den Batteriepackmontierteil (17) des Kraftwerkzeuges (10) montiert zu werden, wenn er entlang des Batteriepackmontierteils (17) in einer Gleitmontierrichtung geschoben wird.

2. Batterievorrichtung nach Anspruch 1, bei dem die Verbindungsvorrichtung zum direkten Verbinden des Adapterkabels (23) mit dem Kraftwerkzeug (10) betätigbar ist.

3. Batterievorrichtung nach einem der vorherigen Ansprüche, bei der die Verbindungsvorrichtung (C3) einen Entfernungsverhinderungsmechanismus enthält, der zum Verhindern eines versehentlichen Lösens der Verbindungsvorrichtung (C3) konfiguriert ist.

4. Batterievorrichtung nach einem der vorherigen Ansprüche, bei der die Verbindungsvorrichtung (C3) einen wasserdichten Mechanismus enthält, der zum Verhindern, dass Wasser versehentlich ins Innere der Verbindungsvorrichtung (C3) eindringt, konfiguriert ist.

5. Batterievorrichtung nach einem der vorherigen Ansprüche, bei der die Körpereinheit (33) mit einem Batterieladegerät (35) über die Verbindungsvorrichtung verbindbar ist.

6. System, das das Kraftwerkzeug (10) und die Batterievorrichtung nach einem der Ansprüche 1 bis 5 aufweist.

7. System nach Anspruch 6, das weiter ein Batterieladegerät (35) enthält, bei dem die Körpereinheit (33) an ein Ladegerät (35) über die Verbindungsvorrichtung verbunden werden kann.

## Revendications

1. Dispositif (36) de batterie comprenant:
une unité (33) de corps ayant un batterie (25) en paquet montée dessus;
un cordon (23) d'adaptateur capable de connecter l'unité (33) de corps à un outil (10) de puissance, de façon à ce qu'une puissance électrique de la batterie (25) en paquet puisse être fournie à l'outil (10) de puissance via le cordon (23) d'adaptateur;
un dispositif (C3) de connection associé avec le cordon (23) d'adaptateur et opérable entre un état de connection et un état de déconnection, dans lequel l'unité (33) de corps est séparable de l'outil (10) de puissance quand le dispositif (C3) de connection est dans l'état de déconnection, et
une unité (22) d'adaptateur adaptée pour pouvoir être montée sur une partie (17) de montage de la batterie de l'outil (10) de puissance, dans lequel quand le dispositif (C3) de connection est dans l'état de connection, l'unité (22) d'adaptateur et l'unité (33) de corps sont connectées l'une à l'autre via le cordon (23) d'adaptateur, de façon à ce que l'unité (33) de corps soit connectable à l'outil (10) de puissance avec l'intervention de l'unité (22) d'adaptateur,
dans lequel l'unité (33) de corps est adaptée pour être portée sur le dos d'un utilisateur,
**caractérisé en ce que**
le dispositif (C3) de connection est pourvu à un point au milieu du cordon (23) d'adaptateur, et l'unité (22) d'adaptateur comprend une partie (22a) de montage coulissante qui est adaptée pour être montée sur la partie (17) de montage de batterie en paquet de l'outil (10) de puissance lorsqu'elle coulisse le long de sur la partie (17) de montage de batterie en paquet dans une direction de montage de coulissement.

2. Dispositif (37) de batterie selon la revendication 1, dans lequel le dispositif de connection est opérable pour connecter directement le cordon (23) d'adaptateur à l'outil (10) de puissance.

3. Dispositif de batterie selon l'une quelconque des revendications précédentes, dans lequel le dispositif (C3) de connection inclut un mécanisme de prévention de retrait configuré pour prévenir une déconnection accidentelle du dispositif (C3) de connection.

4. Dispositif de batterie selon l'une quelconque des revendications précédentes, dans lequel le dispositif (C3) de connection inclut un mécanisme étanche à l'eau configuré pour empêcher que de l'eau entre accidentellement à l'intérieur du dispositif (C3) de connection.

5. Dispositif de batterie selon l'une quelconque des revendications précédentes, dans lequel l'unité (33) de corps est connectable à un chargeur (35) de batterie via le dispositif de connection.

6. Système comprenant l'outil (10) de puissance et le dispositif de batterie selon l'une quelconque des revendications 1 à 5.

7. Système selon la revendication 6, comprenant en outre un chargeur (35) de batterie, dans lequel l'unité (33) de corps peut être connectée au chargeur (35) de batterie par le dispositif de connection.
